# EUROPEAN PATENT SPECIFICATION

(11) **EP 0 206 220 B1**
(45) Date of publication and mention of the grant of the patent: **22.09.1993**
(21) Application number: 86108245.1
(22) Date of filing: 17.06.1986
(51) Int. Cl.: G02F 1/37

(54) **Higher harmonic generator**
Vorrichtung zur Erzeugung höherer Oberwellen
Générateur d'harmoniques

(30) Priority: 18.06.1985 JP 133558/85
(43) Date of publication of application: 30.12.1986
(73) Proprietor: SHARP KABUSHIKI KAISHA, Osaka 545 (JP)
(72) Inventor: Yano, Seiki, Kashihara-shi Nara-ken (JP); Matsumoto, Mitsuhiro, Tenri-shi Nara-ken (JP); Hijikata, Toshiki, Shiki-gun Nara-ken (JP)
(74) Representative: Selting, Günther, Dipl.-Ing.

(56) References cited:
- US-A- 3 822 927

## Description

The present invention relates to a semiconductor laser device which can generate an optical higher harmonic wave.

Many workers have tried the generation of an optical higher harmonic wave by using nonlinear optical material in order to convert infrared light to visible light. A higher harmonic wave can be generated by making use of the nonlinearity of refractive index and polarizability. Unfortunately, the conversion ratio is very small because the nonlinear constants of a nonlinear optical material are very small.

The conversion efficiency η from a fundamental wave to a second harmonic wave can approximately be given as follows: 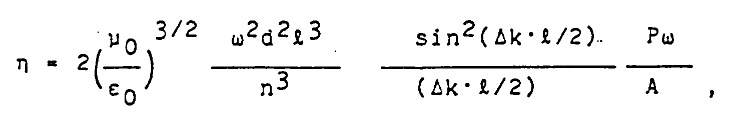
where Δk is a difference between the wave number of the second harmonic wave and that of the fundamental wave, ℓ and d are the length and the width of a nonlinear medium (optical waveguide), respectively, A is a sectional area of the optical waveguide, and P is the power of the incident fundamental wave.

The formula shows that the enhancement of conversion efficiency η needs the increase in the length ℓ of nonlinear medium (optical waveguide), the increase in the power density Pω/A of the incident fundamental wave, and/or the phase matching between the fundamental wave and the second harmonic wave in order to decrease the difference Δk·ℓ in phase to zero. For example, η becomes 1.5% if lithium niobate (LiNbO₃) is used for the nonlinear optical material and the incident fundamental wave of 10⁷W/cm² of Pω/A (which is equivalent to the case that an incident fundamental wave of 100mW is introduced into on an optical waveguide having a sectional area of 1µm x 1µm ) is guided in an optical waveguide of 1 mm of length.

As for the enhancement due to the increase in Pω/A, Uesugi et al. (Oyo Butsuri, Vol.49, No.12 (1980) P.1234 - 1238 (in Japanese)) obtained a high conversion effeciency of 0.77% based upon an experiment for generating a second harmonic wave in use of a three-dimensional optical waveguide of LiNbO₃. However, their method requires very high precisions in arranging crystal axes and in the control of temperature because the phase matching is obtained in such a manner that the refractive index of ordinary rays and that of extraordinary rays are made equal by making use of temperature dependences of these refractive indexes. Therefore, it is very difficult to obtain a high conversion efficiency. Then, they tried to increase the efficiency by making the length ℓ of optical waveguide longer to about a few cm which is one or more orders of magnitude longer than that of an ordinary optical waveguide.

US 3 822 927 discloses a higher harmonic wave generator wherein a harmonic optical wave is generated by the interaction of a fundamental optical wave and a non-linear polarizing material. The fundamental optical wave is coupled to a first optical waveguide provided on a substrate. The same substrate carries a second optical waveguide which is tuned to the wave length of a harmonic optical wave. The interaction of the fundamental wave in the first optical waveguide produces a harmonic which is coupled to the second waveguide to form therein the harmonic wave Phase-matching between the fundamental wave and the harmonic wave is performed according to the depths of the waveguides which consist of grown crystal layers. A continuous crystal growth is difficult to perform. Even if the waveguides are grown continuously, dislocations may occur at the interfaces, and this deteriorates the quality of the crystal.

A purpose of the present invention is to provide a higher harmonic wave generator which has a high conversion efficiency.

This object is solved according to the invention with the features of claim 1.

An advantage of the present invention is that it can provide a higher harmonic generator of a high conversion ratio.

Embodiments of the present invention will now be described with reference to the accompanying drawings, in which:
- Fig. 1: is a schematic plan view of an embodiment of a higher harmonic generator according to the present invention;
- Fig. 2: is a graph which shows the dependence of effective refractive index on the width of optical waveguide;
- Fig. 3: is a schematic plan view of a blue-color laser generator; and
- Figs. 4 and 5: are sectional views of a second and a third embodiments according to the present invention, respectively.

### DETAILED DESCRIPTION OF THE EMBODIMENTS

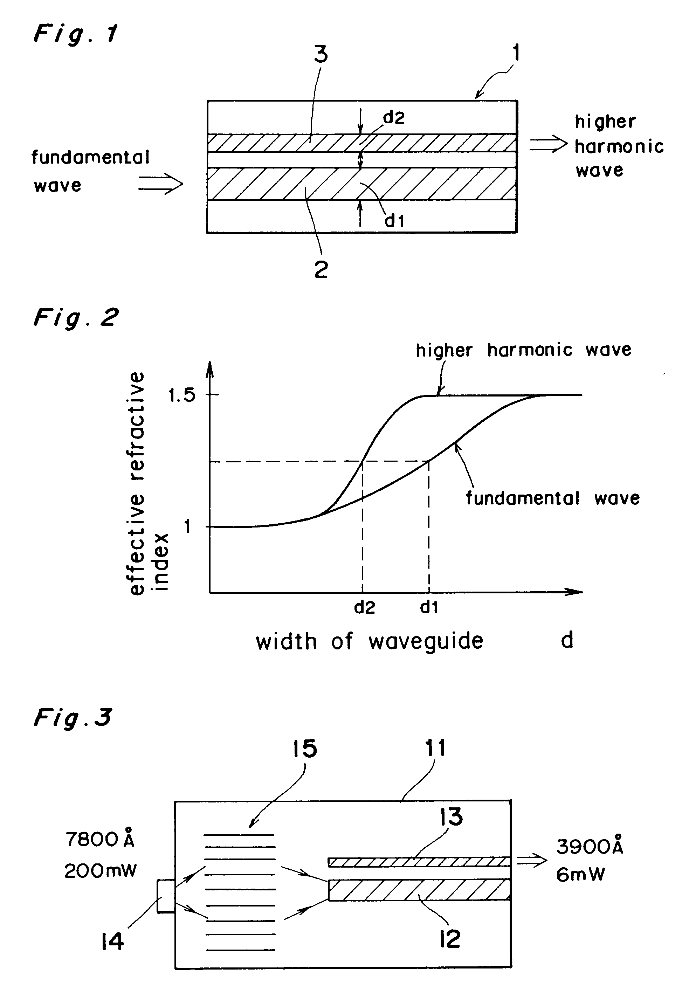

A higher harmonic generator according to the present invention is displayed in Fig. 1. The illustrated device has an optical waveguide 2 having a structure which can guide the fundamental wave and another optical waveguide 3 having a structure which can guide the second harmonic wave, both arranged parallel to each other; both optical waveguides are connected to each other optically, though not shown in Fig. 1. Both optical waveguides 2, 3 can be combined optically according to the amplitudes of refractive index and the length of optical waveguides.

As shown in Fig. 2, the dependence of the effective refractive index of optical waveguide on the width of the optical waveguide for the fundamental wave differs from that of the second harmonic wave when the optical waveguides is made of the same nonlinear material. The widths d1, d2 of both optical waveguides 2, 3 are chosen so that the effective refractive indexes become equal to each other. Then, the phase velocity of the fundamental wave becomes equal to that of the second harmonic wave, and the difference Δk·ℓ of phase between the fundamental wave and the second harmonic one vanishes so that the phase matching is realized. This enhances the conversion efficiency η.

### Embodiment 1

Fig. 3 shows a blue-color laser generator. An optical waveguide 12 of width 2µm of the fundamental wave and another optical waveguide 13 of width 1µm of the second harmonic wave are formed with a spacing of 1µm from the central part to the right end surface of a rectangle 11 of LiNbO₃. Both waveguides 12, 13 are prepared by diffusing titanium by 1µm at 1000°C semicircularly in the direction of depth. The lengths ℓ of the optical waveguide 12, 13 are 1mm. On the other hand, a semiconductor laser array (wavelength 7800 Å, output power 200mW ) 14 is attached at the left end surface, and grating lenses 15 are formed at the right part of the rectangle 11 in order to guide effectively light emitted from the semiconductor laser array 14 to the optical waveguide 12 of the fundamental wave. A device thus produced can emit laser light of wavelength 3900 Å up to 6 mW for the fundamental wave of wavelength 7800 Å of 200mW. That is, the conversion efficiency η is 2% which is nearly equal to the theoretical value.

### Embodiment 2

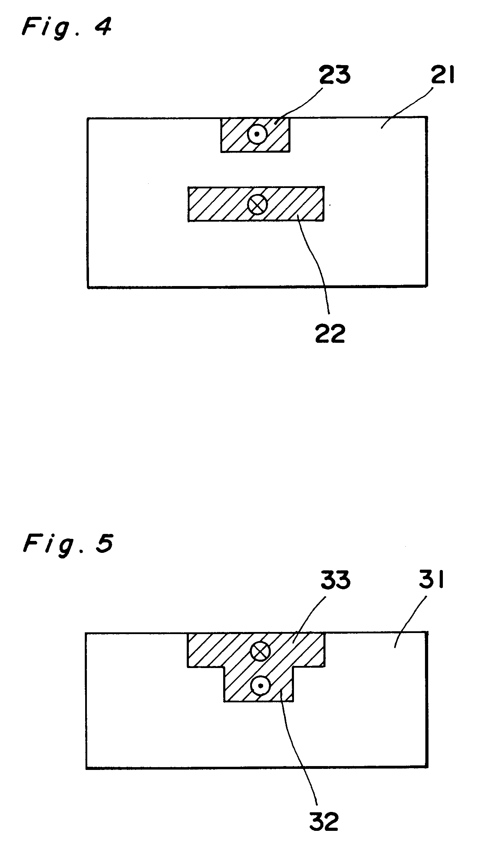

As shown in Fig. 4, a higher harmonic generator 21 of rectangle has an optical waveguide 22, which guides the fundamental wave, and another optical waveguide 23 which guides the second higher harmonic wave, both waveguides connected in a direction of length and arranged in parallel. Other conditions such as the widths d1 and d2 of both optical waveguides 22, 23 are chosen so that the effective refractive indexes of both optical waveguides 22, 23 become equal to each other, as in Embodiment 1.

The fundamental wave is emitted into the optical waveguide 22 in the downward direction of the paper on which Fig. 4 is drawn, while the second harmonic wave is emitted from the optical waveguide 23 from below the paper in the upward direction of Fig. 4 in contrast to Embodiment 1. The directions of the incident and emitted lights can be controlled by arranging reflection mirrors at the ends of the optical waveguides 22, 23.

### Embodiment 3

As shown in Fig. 5, a higher harmonic generator 31 of rectangle has an optical waveguide 33, which guides the fundamental wave, and another waveguide 32 which guides the second harmonic wave, both waveguides arranged in parallel in the direction of length and made in contact with each other at a lower face of the former 33 and at an upper face of the latter 32. Other conditions such as the width d1 and d2 of both optical waveguide 32, 33 are chosen so that the effective refractive indexes of both optical waveguides 32, 33 become equal to each other, as in Embodiment 1.

This arrangement of optical waveguides 32, 33 increases the amplitude of combination of both waveguides and enhances the conversion efficiency.

The fundamental wave is emitted into the optical waveguide 33 in the downward vertical direction of the paper on which Fig. 5 is drawn, while the second harmonic wave is emitted from the optical waveguide 33 from below the paper in the upward direction, as in Embodiment 2. The directions of the incident and emitted lights can be controlled by arranging reflection mirrors at the ends of the optical waveguides 32, 33.

## Claims

1. A higher harmonic wave generator, comprising:
a first optical waveguide (2) made of a non-linear optical material, having a structure which can guide an incident fundamental wave; and
a second optical waveguide (3) made of non-linear optical material, arranged in parallel and optically coupled to said first optical waveguide, having a structure which can guide a higher harmonic wave of the fundamental wave;
**characterized in that**
said first and second optical waveguides (2,3) are made of the same non-linear optical material formed by diffusing impurities into the substrate, and
the widths (d1,d2) of the optical waveguides are chosen so that the effective refractive index of said first optical waveguide and that of said second optical waveguide are equalized to each other.

2. A higher harmonic wave generator according to claim 1, wherein the direction of the incidence of the fundamental wave into the first optical waveguides (2,3) is the reverse of that of the emission of the higher harmonic wave from the second optical waveguide (3).

3. A higher harmonic wave generator according to claim 1, wherein the direction of the incidence of the fundamental wave into the first optical waveguides is the same as that of the emission of the higher harmonic wave from the second optical waveguide.

4. A higher harmonic wave generator according to claim 1, wherein the first and second light waveguides (32,33) make contact with each other.

5. A higher harmonic wave generation device comprising:
a laser emission device (14) which emits laser light;
a lens means (15) which concentrates the laser light emitted from said laser emission device; and
a higher harmonic wave generator according to one of claims 1-4.

## Patentansprüche

1. Vorrichtung zur Erzeugung von höheren Harmonischen, mit:
einem ersten optischen Wellenleiter (2) aus einem nichtlinearen optischen Material, der eine Struktur aufweist, die eine einfallende Grundwelle leiten kann; und
einem zweiten optischen Wellenleiter (3) aus nichtlinearem optischen Material, der parallel zu dem ersten optischen Wellenleiter angeordnet und mit diesem optisch gekoppelt ist, mit einer Struktur, die eine höhere Harmonischenwelle der Grundwelle leiten kann;
dadurch gekennzeichnet, daß
die ersten und zweiten optischen Wellenleiter (2,3) aus dem gleichen nichtlinearen optischen Material bestehen, das durch Diffundieren von Verunreinigungen in das Substrat gebildet ist, und
die Breiten (d1,d2) der optischen Wellenleiter derart gewählt sind, daß der effektive Brechungsindex des ersten optischen Wellenleiters und der des zweiten optischen Wellenleiters einander gleich sind.

2. Vorrichtung zur Erzeugung von höheren Harmonischen nach Anspruch 1, bei der die Einfallsrichtung der Grundwelle in die ersten optischen Wellenleiter (2,3) umgekehrt zu derjenigen der Emission der höheren Harmonischenwelle von dem zweiten optischen Wellenleiter (3) ist.

3. Vorrichtung zur Erzeugung von höheren Harmonischen nach Anspruch 1, bei der die Einfallsrichtung der Grundwelle in die ersten optischen Wellenleiter die gleiche ist wie die der Emission der höheren Harmonischenwelle von dem zweiten optischen Wellenleiter.

4. Vorrichtung zur Erzeugung von höheren Harmonischen nach Anspruch 1, bei der die ersten und zweiten Lichtwellenleiter (32,33) in Kontakt miteinander stehen.

5. Vorrichtung zur Erzeugung von höheren Harmonischen, mit:
einer Laseremissionsvorrichtung (14), die Laserlicht aussendet;
einer Linseneinrichtung (15), die das von der Laseremissionsvorrichtung ausgesandte Licht bündelt; und
einer Vorrichtung zur Erzeugung höherer Harmonischer nach einem der Ansprüche 1-4.

## Revendications

1. Générateur d'onde à harmonique de rang supérieur, comportant :
un premier guide d'onde optique (2) fait d'un matériau optique non linéaire, ayant une structure capable de guider une onde fondamentale incidente; et
un second guide d'onde optique (3) fait d'un matériau optique non linéaire, disposé en parallèle et relié optiquement audit premier guide d'onde optique, ayant une structure capable de guider une onde à harmonique de rang supérieur de l'onde fondamentale;
**caractérisé en ce que**
lesdits premier et second guides d'onde optique (2, 3) sont faits du même matériau optique non linéaire formé par une diffusion d'impuretés dans le substrat, et
les largeurs (d1, d2) des guides d'onde optique sont choisies de façon que l'indice de réfraction effective dudit premier guide d'onde optique et celui dudit second guide d'onde optique soient égalisés l'un par rapport à l'autre.

2. Générateur d'onde à harmonique de rang supérieur, selon la revendication 1, dans lequel la direction de l'incidence de l'onde fondamentale dans les premiers guides d'onde optique (2, 3) est l'inverse de celle de l'émission de l'onde à harmonique de rang supérieur provenant du second guide d'onde optique (3).

3. Générateur d'onde à harmonique de rang supérieur, selon la revendication 1, dans lequel la direction de l'incidence de l'onde fondamentale dans les premiers guides d'onde optique est la même que celle de l'émission de l'onde à harmonique de rang supérieur provenant du second guide d'onde optique.

4. Générateur d'onde à harmonique de rang supérieur selon la revendication 1, dans lequel les premier et second guides d'onde lumineuse (32, 33) établissent un contact l'un avec l'autre.

5. Dispositif générateur d'onde à harmonique de rang supérieur, comportant :
un dispositif d'émission laser (14) qui émet une lumière laser;
un moyen formant lentille (15) qui concentre la lumière laser émise à partir dudit dispositif d'émission laser; et
un générateur d'onde à harmonique de rang supérieur selon l'une des revendications 1 à 4.
